Europäisches Patentamt

European Patent Office

Office européen des brevets

(11) Veröffentlichungsnummer: **0 312 940**
**A2**

## EUROPÄISCHE PATENTANMELDUNG

(21) Anmeldenummer: 88117185.4

(22) Anmeldetag: 15.10.88

(51) Int. Cl.⁴: **H01M 10/48**

(30) Priorität: 23.10.87 DE 3735897

(43) Veröffentlichungstag der Anmeldung:
26.04.89 Patentblatt 89/17

(84) Benannte Vertragsstaaten:
BE DE ES FR GB IT NL SE

(71) Anmelder: **Asea Brown Boveri**
**Aktiengesellschaft**
**Kallstadter Strasse 1**
**D-6800 Mannheim 31(DE)**

(72) Erfinder: **Eck, Gismar, Dr.**
**Alemannenstrasse 6**
**D-7500 Karlsruhe 1(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Hochtemperaturbatterie.**

(57) In Hochtemperaturbatterien sind Temperatursensoren angeordnet, die Teil eines Regelkreises zur Aufrechterhaltung eines vorgegebenen Temperaturbereichs sind. Ein Austausch defekter Temperatursensoren ist aufwendig, da die Batterie abgekühlt und ihre thermische Isolierung entfernt werden muß. Die Austauschbarkeit der Fühler soll deshalb verbessert werden.

Diese Aufgabe wird bei einer Hochtemperaturbatterie (1) durch Anordnung eines Führungsrohres (6) gelöst, durch das ein Temperatursensor (10) von außen durch die thermische Isolierung (3) hindurch bis zu einem Meßort (8) gebracht werden kann. Ein Austausch von Temperatursensoren (10) erfordert dadurch kein Öffnen der Batterie (1).

Die Erfindung kann bei Natrium/Schwefel-Batterien angewendet werden, deren Betriebstemperatur bei etwa 300° bis 350°C liegt.

Fig.1

## Hochtemperaturbatterie

Die Erfindung bezieht sich auf eine Hochtemperaturbatterie gemäß dem Oberbegriff des Anspruchs 1.

Zu solchen beispielsweise für Elektrospeicherfahrzeuge geeigneten Hochtemperaturbatterien zählt auch die aus zahlreichen Veröffentlichungen, z.B. aus NT Nr. 7/8, 1978, Seite 341 bis 345, Aufsatz von Dr. W. Fischer und H. Schöffel, "Die Natrium/Schwefel-Batterie für den Spitzenlastausgleich" bekannte Natrium/Schwefel-Batterie. Die Natrium/Schwefel-Batterie arbeitet bei etwa 300°C bis 350°C. Zur Aufrechterhaltung dieser Temperatur ist die Batterie mit einer hochwirksamen Wärmeisolierung umgeben, wie z.B. in der DE-OS 35 24 706 beschrieben. Während längerer Betriebspausen, in denen weder ein Lade- noch ein Entladebetrieb stattfindet, kann durch interne oder externe Heizung ein Ausgleich für Wärmeverluste geschaffen werden. Andererseits kann während des Batteriebetriebs die Temperatur so hoch steigen, daß eine Kühlung erforderlich ist. Für die Zu- und Abfuhr von Medien zur Kühlung oder Heizung sind entsprechende Kanäle in der Batterie und Durchführungen durch die Wärmeisolierung vorgesehen. Die Steuerung und Regelung von Einrichtungen zur Heizung oder Kühlung erfolgt in Abhängigkeit von der Batterietemperatur, die mit Temperatursensoren erfaßt wird, z.B. mit Thermoelementen, die an ausgewählten Meßorten in der Batterie angeordnet sind.

Bei der Anordnung von Temperatursensoren sind einige Bedingungen zu beachten. Es muß z.B. ein elektrischer Kurzschluß zwischen Zellen oder Zellgruppen vermieden werden. Ebenso eine Beschädigung des Sensors selbst. Außerdem sollen die Sensoren ihre Position am Meßort auf Dauer möglichst genau einhalten.

Während der Montage der Batterie werden die Temperatursensoren unter Beachtung der genannten Anforderungen positioniert und befestigt. Wenn die Batterie fertiggestellt ist, sind die Sensoren wegen der Wärmeisolierung nicht mehr zugänglich. Zum Austausch eines defekten Sensors muß deshalb die Batterie abgekühlt und geöffnet werden. Der Sensoraustausch ist dadurch zeitaufwendig und kostspielig.

Der Erfindung liegt die Aufgabe zugrunde, eine Hochtemperaturbatterie vorzuschlagen, bei der ein Austausch von Temperatursensoren auf einfachere Weise möglich ist.

Diese Aufgabe wird bei einer Hochtemperaturbatterie nach dem Oberbegriff des Anspruchs 1 durch dessen kennzeichnende Merkmale gelöst. Vorteilhafte Ausgestaltungen sind in den Unteransprüchen angegeben. Mit der Erfindung wird vorgeschlagen, in die Batterie mindestens ein Führungsrohr für Temperatursensoren einzubauen, das von der Außenseite der Wärmeisolierung bis zur vorgesehenen Position des Sensors in der Batterie reicht. Durch das Führungsrohr kann der Sensor von außen bis zum Meßort geschoben und in dieser Position befestigt werden. Ein Tausch von Temperatursensoren ist dadurch ohne Abkühlung und Öffnung der Batterie möglich. Die obengenannten Anforderungen können zuverlässig erfüllt werden.

Ausführungsbeispiele sind nachstehend anhand der Zeichnung beschrieben.

Dabei zeigt

Fig. 1 eine Hochtemperaturbatterie mit einem Führungsrohr für einen Sensor,

Fig. 2 ein in die elektrische Isolierung eines Batteriepols integriertes Führungsrohr.

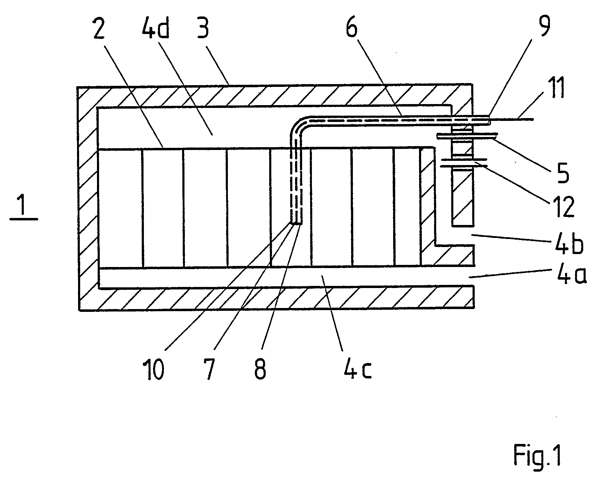

In Fig. 1 ist schematisch eine Hochtemperaturbatterie 1 dargestellt, die mehrere Zellgruppen 2 enthält, die von einer thermischen Isolierung 3 umgeben sind. Durch die thermische Isolierung 3 führen Eintrittsöffnungen 4a und Austrittsöffnungen 4b für ein Medium, z.B. Luft zur Kühlung oder auch Heizung der Batterie, soweit nicht eine interne Heizeinrichtung vorgesehen ist. Die Isolierung 3 enthält weitere Durchführungen, nämlich für Batteriepole 5 und elektrische Leitungen 12 zur elektrischen Batterieheizung. Schließlich ist ein Führungsrohr 6 angeordnet. Ein erstes Ende 7 des Führungsrohres 6 ist verschlossen und befindet sich an einem ausgewählten Temperaturmeßort 8. Ein zweites Ende 9 des Führungsrohres 6 ist offen und befindet sich außerhalb der thermischen Isolierung 3. Der Durchmesser des Rohres 6 und evtl. erforderliche Krümmungsradien sind an die Abmessungen eines oder mehrerer Temperatursensoren 10 angepaßt, die mit ihren Anschlußleitungen 11 durch das Rohr 6 bis zum Meßort 8 geschoben werden können.

Das Führungsrohr 6 kann - je nach Bauart der Batterie 1 - fest mit der thermischen Isolierung 3 oder mit Batterieeinbauten, z.B. mit Zellgruppen 2 verbunden sein. Um die Gesamtzahl der Durchführungen durch die thermische Isolierung 3 gering zu halten, kann das Führungsrohr 6 auch in eine der Durchführungen 4, 5 für Strom oder Kühlmedien integriert werden.

Zur Verbesserung der thermischen Ankopplung des Temperatursensors 10 an die Wand des Führungsrohrs 6 kann Wärmeleitpaste in das Rohr 6 eingebracht werden.

Bei direkt luftgekühlten Batterien 1 ist es besonders vorteilhaft, das Führungsrohr 6 in eine der Eintrittsöffnungen 4a für die Kühlluft zu integrieren. Da bei solchen Batterien I ein Verteilerkanal 4c des Kühlsystems aus physikalischen Gründen im Gegensatz zu einem Sammlerkanal 4d vorzugsweise fast fluchtend mit den Eintrittsöffnungen 4a verbunden ist, kann das Führungsrohr 6 mit einem Minimum an Biegungen zu jedem gewünschten Punkt innerhalb der Zellmatrix, d.h. Zellengruppe 2, gelegt werden.

Bei Batterien ohne direkte Luftkühlung bieten sich für das Führungsrohr insbesondere die Durchführungen für Leitungen 12 zur elektrischen Batterieheizung bzw. für gegebenenfalls vorhandene Teilspannungsabgriffe an. In beiden Fällen treten keine besonderen Probleme mit der elektrischen Isolierung auf.

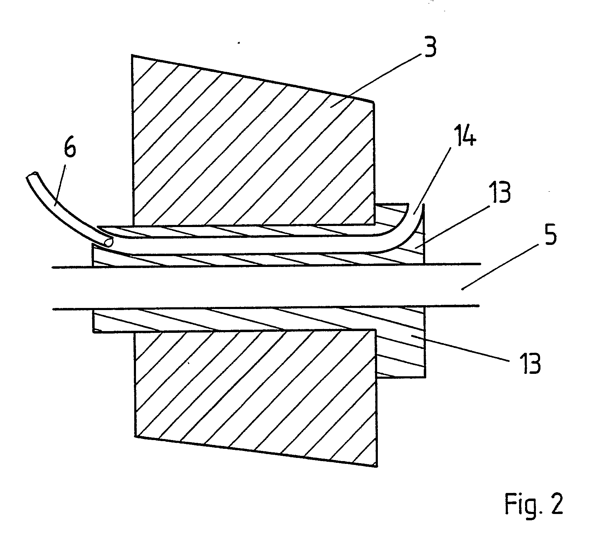

In besonderen Fällen kann es notwendig sein, das Führungsrohr 6 in eine der Durchführungen für Batteriepole 5 zu integrieren. In desem Fall muß das Führungsrohr 6 sicher gegen den betreffenden Batteriepol 5 elektrisch isoliert werden. In Fig. 2 ist ein entsprechendes Ausführungsbeispiel dargestellt.

Dabei ist ein Ausschnitt aus der thermischen Isolierung 3 dargestellt, in die ein elektrisch isolierendes und gegen hohe Temperaturen resistentes Durchführungsteil 13 eingesetzt ist. Durch das Durchführungsteil 13 ist ein Batteriepol 5 hindurchgeführt. Außerdem enthält das Durchführungsteil 13 einen Durchführungskanal 14, durch den ein Führungsrohr 6 hindurchgeführt werden kann. Im Hinblick auf die elektrische Isolierung des Führungsrohres 6 gegenüber dem Batteriepol 5 sollen die Austrittsöffnungen des Durchführungskanals 14 möglichst weit vom Batteriepol 5 entfernt liegen.

**Ansprüche**

1. Hochtemperaturbatterie mit mindestens einer elektrochemischen Speicherzelle und einer thermischen Isolierung, die mit Leitungsdurchführungen versehen ist, dadurch gekennzeichnet, daß in der Batterie (1) mindestens ein Führungsrohr (6) angeordnet ist, wobei ein erstes Ende (7) des Führungsrohrs (6) sich an einem Temperaturmeßort (8) in der Batterie (1) befindet und verschlossen ist und ein zweites Ende (9) des Führungsrohrs (6) durch die thermische Isolierung (3) der Batterie (1) herausgeführt ist und offen ist für die Aufnahme mindestens eines Temperatursensors (10), der durch das Führungsrohr (6) bis an den Meßort (8) geschoben werden kann.

2. Hochtemperaturbatterie nach Anspruch 1, dadurch gekennzeichnet, daß das Führungsrohr (6) in eine der Öffnungen (4a,4b) für ein Kühlmedium, oder in Durchführungen für elektrische Leitungen (12) oder in ein Durchführungsteil (13) für einen Batteriepol (5) integriert ist.

3. Hochtemperaturbatterie nach Anspruch 1 oder 2, dadurch gekennzeichnet, daß zur Verbesserung der thermischen Kopplung von Temperatursensor (10) und Führungsrohr (6) eine Wärmeleitpaste in das Führungsrohr eingebracht ist.

Fig.1

Fig. 2